(19) Europäisches Patentamt European Patent Office Office européen des brevets

(11) **EP 4 534 255 A1**

(12) **EUROPEAN PATENT APPLICATION**
published in accordance with Art. 153(4) EPC

(43) Date of publication:
09.04.2025 Bulletin 2025/15

(21) Application number: 23811197.5

(22) Date of filing: 26.05.2023

(51) International Patent Classification (IPC):
*B25J 9/16* (2006.01)

(86) International application number:
PCT/CN2023/096675

(87) International publication number:
WO 2023/227127 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.05.2022 CN 202210593324

(71) Applicants:
• Guangdong Midea White Home Appliance
Technology
Innovation Center Co., Ltd.
Foshan, Guangdong 528311 (CN)

• Midea Group Co., Ltd.
Foshan, Guangdong 528311 (CN)

(72) Inventors:
• YANG, Lei
Foshan, Guangdong 528311 (CN)
• ZHONG, Wenjin
Foshan, Guangdong 528311 (CN)

(74) Representative: Ran, Handong et al
Maucher Jenkins
Seventh Floor Offices
Artillery House
11-19 Artillery Row
London SW1P 1RT (GB)

(54) **CONTROL CIRCUIT AND CONTROL METHOD FOR JOINT MODULE AND ROBOT**

(57) A control circuit of a joint module (4), comprising: a filtering integration device (1), a first controller (2) and a second controller (3) which are electrically connected in sequence, wherein the filtering integration device (1) is used for electrically connecting to the joint module (4) and carrying out filtering integration processing on a first position signal and a second position signal to obtain a third position signal, the first controller (2) is used for generating a first speed signal on the basis of the third position signal and a target position signal, and the second controller (3) is used for controlling the joint module (4) on the basis of the first speed signal, a second speed signal and a current signal. The third position signal can accurately reflect a position corresponding to an actually outputted rotation angle of a decelerator (43), so that the deviation between the third position signal and the target position signal can be reduced according to the third position signal, thus accurately controlling the joint module (4), and improving the movement accuracy of the joint module (4). Also provided are a control method for the joint module (4) and a robot.

FIG. 7

EP 4 534 255 A1

# Description

This application claims priority to Chinese Patent Application No. 202210593324.5, filed on May 27, 2022 and entitled "CONTROL CIRCUIT AND CONTROL METHOD OF JOINT MODULE AND ROBOT," the disclosure of which is herein incorporated by reference in its entirety.

## TECHNICAL FIELD

The present application relates to the field of industrial manufacturing technologies, and in particular, relates to a control circuit for a joint module, a method for controlling a joint module, and a robot.

## BACKGROUND

Currently, robots are playing an increasingly important role in the field of industrial manufacturing. A joint module, as a core component of a robot, is crucial to functioning of the robot. The joint module includes a power driver, a motor, a reducer, and a joint that are electrically connected in sequence. A first sensor is disposed between the reducer and the joint, and is configured to generate a position signal corresponding to the joint based on a sensed revolute angle of the reducer. The position signal indicates a position corresponding to the revolute angle of the joint. Further, a second sensor is disposed between the motor and the reducer, and is configured to generate a speed signal corresponding to the joint based on a sensed revolution speed of the motor. The speed signal indicates the revolute angle of the joint. Moreover, a third sensor is disposed between the power driver and the motor, and is configured to generate a current signal corresponding to the joint based on a magnitude of a sensed current of the motor. The current signal indicates the magnitude of the current of the joint.

In some practices, the control circuit for the joint module includes a first controller and a second controller. An input terminal of the first controller is electrically connected to the first sensor, an output terminal of the first controller is electrically connected to an input terminal of the second controller, and an output terminal of the second controller is electrically connected to the power driver, the second sensor, and the third sensor. The first controller is configured to convert the signal based on a predetermined position signal and a position signal fed back by the first sensor to the speed signal corresponding to the joint. The predetermined position signal causes revolute angle actually output by the joint to be equal to a theoretically output revolute angle, and then the speed signal is transmitted to the second controller. The second controller is configured to convert the signal based on the speed signal transmitted by the first controller and the speed signal fed back by the second sensor to the current signal corresponding to the joint, generate a control

signal based on the current signal and the current signal fed back by the third sensor, and control the revolute angle and the revolution speed of the joint module based on the control signal.

However, the deviation between the revolute angle actually output by the reducer and the theoretically output revolute angle is not eliminated using by indicating the revolute angle actually output by the reducer using the position signal generated by the first sensor, such that the joint module is not accurately controlled, thereby resulting in a lower accuracy of motion of the joint module.

## SUMMARY

Embodiments of the present application provide a control circuit for a joint module, a method for controlling a joint module, and a robot, which can improve the accuracy of the motion of the joint module. The technical solutions are as follows.

In an aspect, a control circuit for a joint module is provided. The control circuit includes: a filter and fuser device, a first controller, and a second controller that are electrically connected in sequence; wherein

the filter and fuser device is electrically connected to the joint module and is configured to perform a filtering and fusing process on a first position signal and a second position signal to acquire a third position signal, wherein the first position signal indicates a position corresponding to a revolute angle input by a joint in the joint module, the second position signal indicates a position corresponding to a revolute angle input by a reducer in the joint module, and the third position signal indicates a position corresponding to a revolute angle actually output by the reducer; the first controller is configured to generate a first speed signal based on the third position signal and a target position signal, wherein the target position signal indicates a position corresponding to a revolute angle theoretically output by the reducer; and the second controller is configured to control the joint module based on the first speed signal, a second speed signal, and a current signal, wherein the second speed signal indicates a revolution speed output by a motor in the joint module, and the current signal indicates a magnitude of a current input by the motor.

In some embodiments, the filter and fuser device includes a first signal fuser, a first filter assembly, and a second filter assembly; wherein

an input terminal of the first filter assembly and an input terminal of the second filter assembly are electrically connected to the joint module, an output terminal of the first filter assembly and an output terminal of the second filter assembly are electrically connected to an input terminal of the first signal fuser, and an output terminal of the first signal fuser is electrically connected to an input terminal of the first controller;
the first filter assembly is configured to filter a signal whose frequency is greater than a first reference frequency in the first position signal to acquire a fourth position signal;
the second filter assembly is configured to filter a signal whose frequency is less than the first reference frequency in the second position signal to acquire a fifth position signal; and
the first signal fuser is configured to fuse the fourth position signal and the fifth position signal to acquire the third position signal.

In some embodiments, the second filter assembly includes a first filter and a frequency reducer; wherein

an input terminal of the frequency reducer is electrically connected to the joint module, an output terminal of the frequency reducer is electrically connected to an input terminal of the first filter, and an output terminal of the first filter is electrically connected to the input terminal of the first signal fuser;
the frequency reducer is configured to perform frequency reduction on the second position signal based on a reduction ratio of the reducer; and
the first filter is configured to filter the signal whose frequency is less than the first reference frequency in the second position signal experiencing the frequency reduction to acquire the fifth position signal.

In some embodiments, the filter and fuser device includes a second signal fuser and a third filter assembly; wherein

an input terminal of the third filter assembly is electrically connected to the joint module, an output terminal of the third filter assembly is electrically connected to an input terminal of the second signal fuser, the input terminal of the second signal fuser is further electrically connected to the joint module, and an output terminal of the second signal fuser is electrically connected to an input terminal of the first controller;
the third filter assembly is configured to convert the first position signal, fuse the converted first position signal and the second position signal to acquire a sixth position signal, and filter a signal whose frequency is less than a first reference frequency in the sixth position signal; and
the second signal fuser is configured to fuse the first position signal and the filtered sixth position signal to acquire the third position signal.

In some embodiments, the third filter assembly includes a second filter and a signal converter; wherein

an input terminal of the signal converter and an input terminal of the second filter are electrically connected to the joint module, an output terminal of the signal converter is electrically connected to the input terminal of the second filter, and an output terminal of the second filter is electrically connected to the input terminal of the second signal fuser;
the signal converter is configured to convert the first position signal; and
the second filter is configured to fuse the converted first position signal and the second position signal to acquire the sixth position signal, and filter the signal whose frequency is less than the first reference frequency in the sixth position signal.

In some embodiments, the filter and fuser device includes a third signal fuser and a fourth filter assembly; wherein

an input terminal of the fourth filter assembly and an input terminal of the third signal fuser are electrically connected to the joint module, an output terminal of the fourth filter assembly is electrically connected to the input terminal of the third signal fuser, and an output terminal of the third signal fuser is electrically connected to an input terminal of the first controller;
the fourth filter assembly is configured to convert the second position signal, fuse the converted second position signal and the first position signal to acquire a seventh position signal, and filter a signal whose frequency is greater than a first reference frequency in the seventh position signal; and
the third signal fuser is configured to fuse the second position signal and the filtered seventh position signal to acquire the third position signal.

In another aspect, a robot is provided. The robot includes: a joint module and the control circuit for the joint module according to any of the above embodiments, wherein an input terminal of the joint module is electrically connected to the second controller, and an output terminal of the joint module is electrically connected to an input terminal of the filter and fuser device.
In some embodiments, the joint module includes: a power driver, a motor, a reducer, and a joint that are electrically connected in sequence; wherein

a first sensor is disposed between the reducer and the joint, and is configured to generate a first position signal based on a sensed revolute angle input by the joint and transmit the first position signal to the filter and fuser device;
a second sensor is disposed between the motor and the reducer, and is configured to generate a second position signal based on a sensed revolute angle input by the reducer and transmit the second position signal to the filter and fuser device; and
a third sensor is disposed between the power driver and the motor, and is configured to generate a current signal based on a magnitude of a sensed current input by the motor and transmit the current signal to the second controller.

In another aspect, a method for controlling a joint module is provided. The method is applicable to the control circuit for the joint module according to any of the above embodiments, and includes:

acquiring a first position signal and a second position signal, wherein the first position signal indicates a position corresponding to a revolute angle input by a joint in the joint module, and the second position signal indicates a position corresponding to a revolute angle input by a reducer;
acquiring a third position signal by performing a filtering and fusing process on the first position signal and the second position signal, wherein the third position signal indicates a position corresponding to a revolute angle actually output by the reducer;
generating a first speed signal based on the third position signal and a target position signal; and
controlling the joint module based on the first speed signal, a second speed signal, and a current signal, wherein the second speed signal indicates a revolution speed output by a motor in the joint module, and the current signal indicates a magnitude of a current input by the motor.

In some embodiments, acquiring the third position signal by performing the filtering and fusing process on the first position signal and the second position signal includes:

acquiring a fourth position signal by filtering a signal whose frequency is greater than a first reference frequency in the first position signal;
acquiring a fifth position signal by filtering a signal whose frequency is less than the first reference frequency in the second position signal; and
acquiring the third position signal by fusing the fourth position signal and the fifth position signal.

In some embodiments, acquiring the fifth position signal by filtering the signal whose frequency is less than the first reference frequency in the second position signal includes:

performing frequency reduction on the second position signal based on a reduction ratio of the reducer; and
acquiring the fifth position signal by filtering the signal whose frequency is less than the first reference frequency in the second position signal experiencing the frequency reduction.

In some embodiments, in a case that a first filter is a first-order filter,

acquiring the fifth position signal by filtering the signal whose frequency is less than the first reference frequency in the second position signal experiencing the frequency reduction includes:
acquiring a filtering time parameter, wherein the filtering time parameter indicates a bandwidth of the first filter; and
acquiring the fifth position signal by filtering the signal whose frequency is less than the first reference frequency by filtering the second position signal experiencing the frequency reduction based on the filtering time parameter using a first Laplace operator.

In some embodiments, in a case that a first filter is a second-order filter,
acquiring the fifth position signal by filtering the signal whose frequency is less than the first reference frequency in the second position signal experiencing the frequency reduction includes:

acquiring a natural oscillation angular frequency parameter and a damping ratio parameter, wherein the natural oscillation angular frequency parameter indicates an angular frequency of oscillation in a case that a damping is 0, and the damping ratio parameter indicates a degree of energy dissipation in an oscillation process; and
acquiring the fifth position signal by filtering the signal whose frequency is less than the first reference frequency by filtering the second position signal experiencing the frequency reduction based on the natural oscillation angular frequency parameter and the damping ratio parameter using a second Laplace operator.

In some embodiments, acquiring the third position signal by performing the filtering and fusing process on the first position signal and the second position signal includes:

acquiring a sixth position signal by converting the first position signal and fusing the converted first position signal and the second position signal;
filtering a signal whose frequency is less than a first reference frequency in the sixth position signal; and
acquiring the third position signal by fusing the first position signal and the filtered sixth position signal.

In some embodiments, acquiring the third position signal by performing the filtering and fusing process on the first position signal and the second position signal includes:

acquiring a seventh position signal by converting the second position signal and fusing the converted second position signal and the first position signal;
filtering a signal whose frequency is greater than a first reference frequency in the seventh position signal; and

acquiring the third position signal by fusing the second position signal and the filtered seventh position signal.

In another aspect, a computer-readable storage medium is provided. The computer-readable storage medium stores one or more program codes, wherein the one or more program codes, when loaded and executed by a processor, cause the processor to perform the method for controlling the joint module according to any of the above embodiments.

In another aspect, a computer program product is provided. The computer program product stores one or more program codes, wherein a processor, when loading and executing the one or more program codes, is caused to perform the method for controlling the joint module according to any of the above embodiments.

The embodiments of the present application provide a control circuit for a joint module. The control circuit perform a filtering and fusing process on a first position signal and a second position signal using a filter and fuser device to acquire a third position signal. As the first position signal indicates a position corresponding to a revolute angle input by a joint in the joint module, and the second position signal indicates a position corresponding to a revolute angle input by a reducer in the joint module, the third position signal acquired by performing the filtering and fusing process on the first position signal and the second position signal accurately indicates a position corresponding to a revolute angle actually output by the reducer, such that the deviation between the third position signal and the predetermined target position signal is reduced based on the third position signal, the joint module is accurately controlled, and the accuracy of the motion of the joint module is improved.

It should be understood that the above description and the following description are only exemplary, and do not limit the present application.

## BRIEF DESCRIPTION OF DRAWINGS

FIG. 1 is a schematic diagram of a control circuit for a joint module according to some embodiments of the present application;
FIG. 2 is a schematic diagram of a control circuit for a joint module according to some embodiments of the present application;
FIG. 3 is a schematic diagram of a control circuit for a joint module according to some embodiments of the present application;
FIG. 4 is a schematic diagram of a control circuit for a joint module according to some embodiments of the present application;

FIG. 5 is a schematic diagram of a control circuit for a joint module according to some embodiments of the present application;
FIG. 6 is a schematic diagram of a control circuit for a joint module according to some embodiments of the present application;
FIG. 7 is a schematic diagram of a robot according to some embodiments of the present application;
FIG. 8 is a schematic diagram of controlling a joint module by a control circuit according to some embodiments of the present application;
FIG. 9 is a schematic diagram of controlling a joint module by a control circuit according to some embodiments of the present application;
FIG. 10 is a schematic diagram of controlling a joint module by a control circuit according to some embodiments of the present application;
FIG. 11 is a flowchart of a method for controlling a joint module according to some embodiments of the present application;
FIG. 12 is an open-loop Bode diagram of a position control loop according to some embodiments of the present application;
FIG. 13 is a flowchart of a method for controlling a joint module according to some embodiments of the present application; and
FIG. 14 is a flowchart of a method for controlling a joint module according to some embodiments of the present application.

Reference numerals and denotations thereof: 1-filter and fuser device, 2-first controller, 3-second controller, 4-joint module, 10-first signal fuser, 11-first filter assembly, 12-second filter assembly, 13-second signal fuser, 14-third filter assembly, 15-third signal fuser, 16-fourth filter assembly, 31-speed controller, 32-current controller, 41-power driver, 42-motor, 43-reducer, 44-joint, 45-first sensor, 46-second sensor, 47-third sensor, 121-first filter, 122-frequency reducer, 141-second filter, 142-signal converter, 143 - second frequency reducer, 161-fourth filter, 162 - second signal converter, 163 -third frequency reducer.

## DETAILED DESCRIPTION

To make the objectives, technical solutions, and advantages of the present application clearer, the embodiments of the present application are further described hereinafter.

The terms "first," "second," "third," "fourth," and the like in the description, claims, and accompanying drawings in the present application are only used distinguish different objects, but not used to describe a specific sequence. In addition, the terms "include," "comprise," and derivatives thereof are intended to cover non-exclusive inclusion. For example, a process, a method, a system, a product or a device including a series of steps or units is not limited to those listed steps or units, but may include steps or units that are not listed or inherent to the process, the method, the system, the product or the device.

It should be noted that information (including, but not limited to information of the user device, personal information of the user, and the like), data (including, but not limited to data for analysis, stored data, displayed data, and the like), and signals involved in the present application are authorized by the user or fully authorized by all parties, and collection, usage, and processing of the related data are subject to the relevant laws, regulations, and standards of the relevant countries and regions. For example, the position signal, the revolute angle, the revolution speed, and the current involved in the present application are acquired with fully authorization.

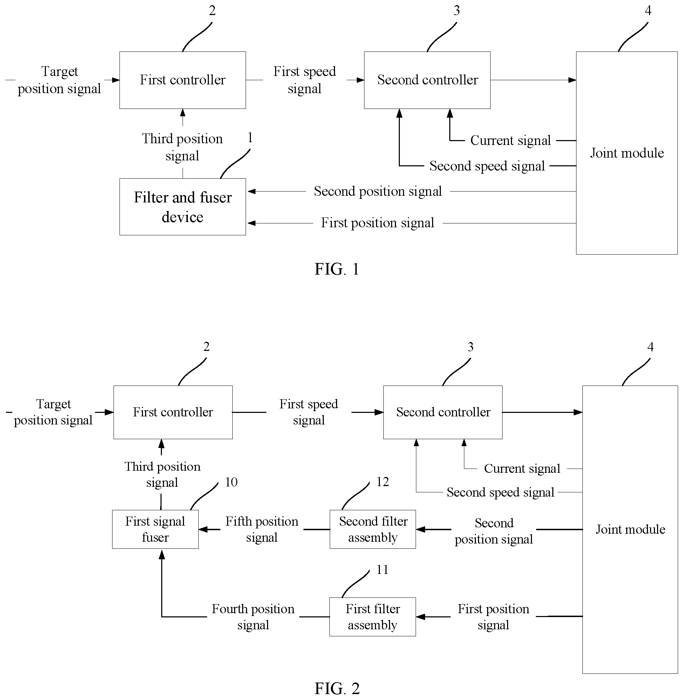

FIG. 1 is a schematic diagram of a control circuit for a joint module according to some embodiments of the present application. Referring to FIG. 1, the control circuit includes a filter and fuser device 1, a first controller 2, and a second controller 3 that are electrically connected in sequence.

The filter and fuser device 1 is electrically connected to the joint module 4 and is configured to perform a filtering and fusing process on a first position signal and a second position signal to acquire a third position signal. The first position signal indicates a position corresponding to a revolute angle input by a joint in the joint module 4, the second position signal indicates a position corresponding to a revolute angle input by a reducer in the joint module 4, and the third position signal indicates a position corresponding to a revolute angle actually output by the reducer.

The first controller 2 is configured to generate a first speed signal based on the third position signal and a target position signal. The target position signal indicates a position corresponding to a revolute angle theoretically output by the reducer.

The second controller 3 is configured to control the joint module 4 based on the first speed signal, a second speed signal, and a current signal. The second speed signal indicates a revolution speed output by a motor in the joint module 4, and the current signal indicates a magnitude of a current input by the motor.

In the embodiments of the present application, the joint module 4 includes a power driver, a motor, a reducer, and a joint that are electrically connected in sequence. A first sensor is disposed between the reducer and the joint, and is configured to determine a revolution position of the joint based on a sensed revolute angle and generate a first position signal. A second sensor is disposed between the motor and the reducer, and is configured to determine a revolution position of the reducer based on a sensed revolute angle and generate a second position signal. In addition, the second sensor is further configured to determine a revolution speed output by the motor based on a sensed revolution speed, and generate a second speed signal. A third sensor is disposed between the power driver and the motor, and is configured to determine a magnitude of a current input by the motor based on a magnitude of a sensed current and generate a current signal. In addition, the target position signal is an external-input signal or a signal transmitted by a processor, which is not limited herein.

In the embodiments of the present application, the third position signal indicates a position corresponding to a revolute angle actually output by the reducer, and the target position signal indicates a position corresponding to a revolute angle theoretically output by the reducer. The first controller 2 adjusts the target position signal based on the third position signal to reduce the deviation between the target position signal and the third position signal, and generates a first speed signal based on the deviation. The first speed signal indicates the revolution speed input by the motor.

It can be seen that in the embodiments of the present application, the third position signal is determined as closed-loop feedback information of a position control loop to reduce the negative impact of the flexibility factor of the reducer and improve the dynamic stability and the steady-state accuracy of the joint. The position control loop refers to a loop in which the power drivers are at the beginning and end of the loop, and the motor, the second sensor, the reducer, the first sensor, the first controller 2, and the second controller 3 are in the middle of the loop.

A robot further includes a speed control loop. In some embodiments, the second speed signal is directly determined as closed-loop feedback information of the speed control loop. Correspondingly, the second sensor transmits the second speed signal to the second controller, and the second controller generates a current signal based on the second speed signal and the first speed signal transmitted by the first controller.

In the embodiments, the second controller 3 includes a speed controller and a current controller, and the second sensor transmits the second speed signal to the speed controller and transmits a commutation signal to the current controller. The commutation signal indicates commutation information of the current output by the motor. Accordingly, the first controller 2 transmits the first speed signal to the speed controller, and the speed controller generates the current signal based on the first speed signal and the second speed signal. For convenient distinction, the current signal generated by the speed controller is referred to as the first current signal, the current signal corresponding to the magnitude of the current input by the motor is referred to as the second current signal, and the speed controller transmits the first current signal to the current controller. The current controller generates the control signal based on the first current signal, the second current signal, and the commutator signal, and controls the revolute angle and the revolution speed of the joint module based on the control signal.

In some embodiments, the second speed signal and the third speed signal are determined as closed-loop feedback information of the speed control loop. The third speed signal indicates the revolution speed input by the joint. Correspondingly, the first sensor transmits the third speed signal to the second controller, and the second controller generates a fourth speed signal based on the second speed signal and the third speed signal and generates the current signal based on the fourth speed signal and the first speed signal.

In the embodiments, the first sensor transmits the third speed signal to the speed controller, and the second sensor transmits the second speed signal to the speed controller and transmits the commutation signal to the current controller. Correspondingly, the first controller 2 transmits the first speed signal to the speed controller, and the speed controller fuses the second speed signal and the third speed signal to acquire the fourth speed signal, generates the first current signal based on the fourth speed signal and the first speed signal, and transmits the first current signal to the current controller. The current controller generates the control signal based on the first current signal, the second current signal, and the commutation signal, and controls the revolute angle and the revolution speed of the joint based on the control signal.

The speed controller directly fuses the second speed signal and the third speed signal to acquire the fourth speed signal, weights and sums the second speed signal and the third speed signal to acquire the fourth speed signal, or performs the filtering and fusing process on the second speed signal and the third speed signal to acquire the fourth speed signal, which is not limited herein.

In the case that the second speed signal and the third speed signal are weighted and summed, a weight of the second speed signal and a weight of the third speed signal are set and changeable based on needs. For example, the weight of the second speed signal is greater than the weight of the third speed signal, or the weight of the second speed signal is less than the weight of the third speed signal. In the case that the filtering and fusing process is performed on the second speed signal and the third speed signal, the process is similar to the filtering and fusing process on the first position signal and the second position signal in the present application, which is not repeated herein.

In the embodiments, the fourth speed signal acquired after fusion of the second speed signal and the third speed signal is determined as the closed-loop feedback information of the speed control loop, such that the performance of the speed control loop is improved to some extent. It can be seen that in the embodiments of the present application, the performance of the position control loop is improved, and the performance of the speed control loop is also improved, such that the overall performance of the joint module is improved.

In the embodiments of the present application, the first speed signal and the second speed signal are fused using a high-pass filter and a low-pass filter, that is, by the following first implementation; or, the first speed signal and the second speed signal are fused only using a high-pass filter, that is, by the following second implementation; or, the first speed signal and the second speed signal are fused only using a low-pass filter, that is, by the following third implementation, which are described hereinafter.

**In the first implementation,** referring to FIG. 2, the filter and fuser device 1 includes a first signal fuser 10, a first filter assembly 11, and a second filter assembly 12.

An input terminal of the first filter assembly 11 and an input terminal of the second filter assembly 12 are electrically connected to the joint module 4, an output terminal of the first filter assembly 11 and an output terminal of the second filter assembly 12 are electrically connected to an input terminal of the first signal fuser 10, and an output terminal of the first signal fuser 10 is electrically connected to an input terminal of the first controller 2.

The first filter assembly 11 is configured to filter a signal whose frequency is greater than a first reference frequency in the first position signal to acquire a fourth position signal.

The second filter assembly 12 is configured to filter a signal whose frequency is less than the first reference frequency in the second position signal to acquire a fifth position signal.

The first signal fuser 10 is configured to fuse the fourth position signal and the fifth position signal to acquire the third position signal.

In the embodiments, the input terminal of the first filter assembly 11 is electrically connected to the first sensor in the joint module 4. The first sensor transmits the first position signal to the first filter assembly 11, and the first filter assembly 11 acquires the fourth position signal by filtering the first position signal and transmits the fourth position signal to the first signal fuser 10. The input terminal of the second filter assembly 12 is electrically connected to the second sensor in the joint module 4. The second sensor transmits the second position signal to the second filter assembly 12, and the second filter assembly 12 acquires the fifth position signal by filtering the second position signal and transmits the fifth position signal to the first signal fuser 10.

The first signal fuser 10 receives the fifth position signal and the fourth position signal, and acquires the third position signal by fusing the fifth position signal and the fourth position signal.

In the embodiments, when fusing the fifth position signal and the fourth position signal, the first signal fuser 10 directly sums the fifth position signal and the fourth position signal, or weights and sums the fifth position signal and the fourth position signal, which is not limited herein.

In the case that the fourth position signal and the fifth position signal are weighted and summed, a weight of the fourth position signal and a weight of the fifth position signal are set and changeable based on needs. For example, the weight of the fourth speed signal is greater than the weight of the fifth position signal, or the weight of the fourth speed signal is less than the weight of the fifth position signal, which is not repeated in the embodiments of the present application.

The first signal fuser 10 is a signal summer or other devices capable of achieving the signal fusion, which is not limited herein. The embodiments of the present application are illustrated using an example where the first signal fuser 10 is a signal summer.

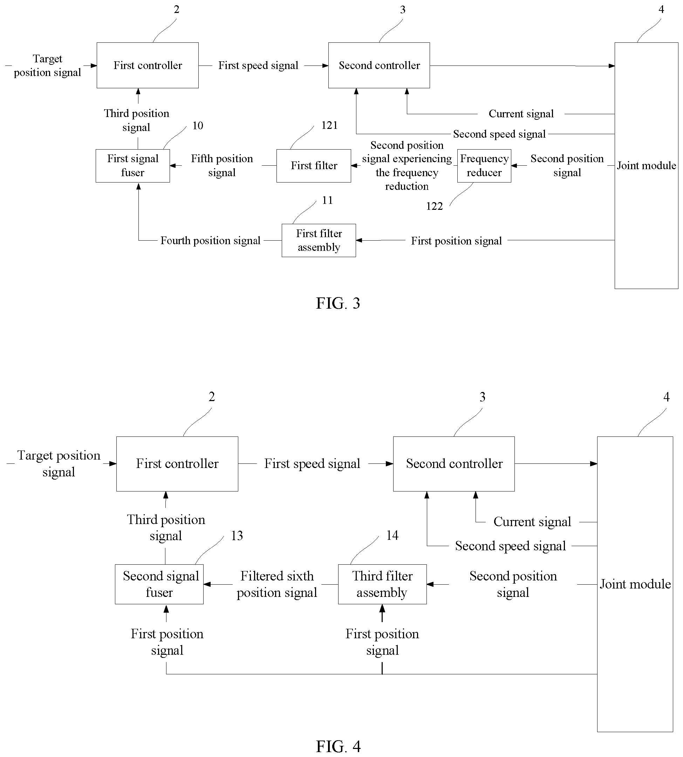

In the embodiments of the present application, referring to FIG. 3, the second filter assembly 12 includes a first filter 121 and a frequency reducer 122.

An input terminal of the frequency reducer 122 is electrically connected to the joint module 4, an output terminal of the frequency reducer 122 is electrically connected to an input terminal of the first filter 121, and an output terminal of the first filter 121 is electrically connected to the input terminal of the first signal fuser 10.

The frequency reducer 122 is configured to perform frequency reduction on the second position signal based on a reduction ratio of the reducer.

The first filter 121 is configured to filter the signal whose frequency is less than the first reference frequency in the second position signal experiencing the frequency reduction to acquire the fifth position signal.

In the embodiments, the input terminal of the frequency reducer 122 is electrically connected to the second sensor in the joint module 4, the second sensor transmits the second position signal to the frequency reducer 122, and the frequency reducer 122 performs the frequency reduction on the second position signal. The frequency reducer 122 is a frequency changer or any device capable of performing the frequency reduction on the second position signal, which is not limited herein.

The frequency reducer 122 acquires the second position signal experiencing the frequency reduction after performing the frequency reduction on the second position signal, and transmits the second position signal experiencing the frequency reduction to the first filter 121. The first filter 121 receives, from the frequency reducer 122, the second position signal experiencing the frequency reduction , and acquires the fifth position signal by filtering the signal whose frequency is less than the first reference frequency in the second position signal experiencing the frequency reduction.

In the embodiments of the present application, the first filter assembly is a filter, and the filter is referred to as the third filter for convenient distinction. The third filter is electrically connected to the first sensor in the joint module 4, the first sensor transmits the first position signal to the third filter, and the third filter acquires the fourth position signal by filtering the signal whose frequency is greater than the first reference frequency in the first position signal.

It can be seen from the above description that the first filter 121 is capable of filtering the signal whose frequency is less than the first reference frequency, the third filter is capable of filtering the signal whose frequency is greater than the first reference frequency, and the two filters are distinguished by the first reference frequency. Thus, the two filters are complementary filters. The first filter 121 is a high-pass filter, that is, the first filter 121 allows the signal whose frequency is greater than or equal to the first reference frequency to pass through. The third filter is a low-pass filter, that is, the third filter allows the signal whose frequency is less than or equal to the first reference frequency to pass through.

It should be noted that the transfer function of the complementary filters meets $G_{HPF} + G_{LPF} = 1$. $G_{LPF}$ represents a transfer function of the low-pass filter, and $G_{HPF}$ represents a transfer function of the high-pass filter. In addition, the first reference frequency is set and changeable based on needs, which is not limited herein.

In the embodiments of the present application, the third position signal is acquired by fusing the first position signal and the second position signal in a frequency domain using the high-pass filter and the low-pass filter. As the third position signal is acquired by fusing the first position signal and the second position signal, the third position signal accurately indicates the position corresponding to the revolute angle actually output by the reducer. Thus, the third position signal is determined as the closed-loop feedback information of the position control loop, such that the bandwidth and stability of the position control loop are efficiently improved, the negative impact of the flexibility factor of the reducer is reduced, and the dynamic stability and the steady-state accuracy of the joint is improved.

**In the second implementation,** the first speed signal and the second speed signal are fused only using a high-pass filter.

Referring to FIG. 4, the filter and fuser device 1 includes a second signal fuser 13 and a third filter assembly 14.

An input terminal of the third filter assembly 14 is electrically connected to the joint module 4, an output terminal of the third filter assembly 14 is electrically connected to an input terminal of the second signal fuser 13, the input terminal of the second signal fuser 13 is further electrically connected to the joint module 4, and an output terminal of the second signal fuser 13 is electrically connected to an input terminal of the first controller 2.

The third filter assembly 14 is configured to convert the first position signal, fuse the converted first position signal and the second position signal to acquire a sixth position signal, and filter a signal whose frequency is less than the first reference frequency in the sixth position signal.

The second signal fuser 13 is configured to fuse the first position signal and the filtered sixth position signal to acquire the third position signal.

In the embodiments, the input terminal of the third filter assembly 14 is electrically connected to the first sensor and the second sensor in the joint module 4, that is, the first sensor and the second sensor respectively transmit the first position signal and the second position signal to the third filter assembly 14. The third filter assembly 14 receives the first position signal and the second position signal, acquires the converted the first position signal by converting the first position signal and the second position signal experiencing the frequency reduction by performing the frequency reduction on the second position signal, acquires the sixth position signal by fusing the second position signal experiencing the frequency reduction and the converted the first position signal, filters the signal whose frequency is less than the first reference frequency in the sixth position signal, and transmits the filtered sixth position signal to the second signal fuser 13.

The input terminal of the second signal fuser 13 is further electrically connected to the first sensor in the joint module 4, that is, the first sensor transmit the first position signal to the third filter assembly 14 and the second signal fuser 13. The second signal fuser 13 receives the first position signal and the filtered sixth position signal transmitted by the third filter assembly 14, and acquires the third position signal by fusing the first position signal and the filtered sixth position signal.

In the embodiments, the second signal fuser 13 directly sums the first position signal and the filtered sixth position signal, or weights and sums the first position signal and the filtered sixth position signal, which is not limited herein.

The second signal fuser 13 is the same as the first signal fuser 10, and thus is a signal summer or other devices capable of achieving the signal fusion. The embodiments of the present application are illustrated using an example where the second signal fuser 13 is a signal summer.

It should be noted that for the third filter assembly 14, the functions of converting the first position signal, performing the frequency reduction on the second position signal, fusing the second position signal experiencing the frequency reduction and the converted first position signal, and filtering the signal whose frequency is less than the first reference frequency in the sixth position signal are implemented by a device or a plurality of devices, which is not limited herein.

In the case that such functions are implemented by a device, the third filter assembly 14 is a high-pass filter, such that such functions are implemented by only the high-pass filter, and the cost is reduced.

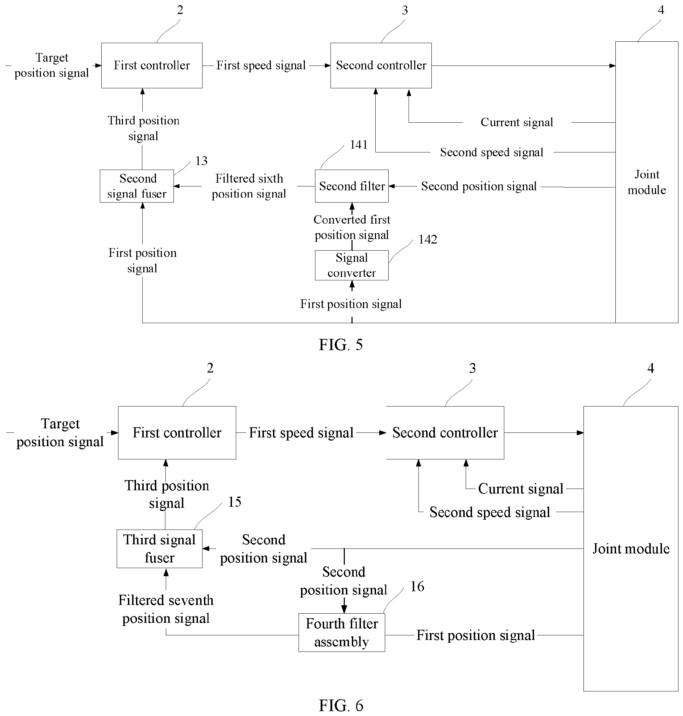

In the case that such functions are implemented by a plurality of devices, referring to FIG. 5, the third filter assembly 14 includes a second filter 141 and a signal converter 142.

An input terminal of the signal converter 142 and an input terminal of the second filter 141 are electrically connected to the joint module 4, an output terminal of the signal converter 142 is electrically connected to the input terminal of the second filter 141, and an output terminal of the second filter 141 is electrically connected to the input terminal of the second signal fuser 13.

The signal converter 142 is configured to convert the first position signal.

The second filter 141 is configured to fuse the converted first position signal and the second position signal to acquire the sixth position signal, and filter the signal whose frequency is less than the first reference frequency in the sixth position signal.

In the embodiments, the input terminal of the signal converter 142 and the input terminal of the second filter 141 are respectively electrically connected to the first sensor and the second sensor. Based on the connection, the first sensor transmits the first position signal to the signal converter 142, and the second sensor transmits the second position signal to the second filter 141.

The signal converter 142 is a signal inverter or other devices capable of converting the signal frequency. The embodiments are illustrated using an example where the signal converter 142 is a signal inverter. The signal inverter converts the frequency of the first position signal, and transmits the converted first position signal to the second filter 141.

In the embodiments, the second sensor directly transmits the second position signal to the second filter 141, the second filter 141 performs the frequency reduction on the second position signal. Alternatively, the second sensor transmits the second position signal to the frequency reducer, and the frequency reducer performs the frequency reduction on the second position signal and transmits the second position signal experiencing the frequency reduction to the second filter 141.

The frequency reducer 122 in the first implementation is referred to as the first frequency reducer for convenient distinction. Correspondingly, the third filter assembly 14 further includes a second frequency reducer 143. An input terminal of the second frequency reducer 143 is electrically connected to the second sensor, and an output terminal of the second frequency reducer 143 is electrically connected to the input terminal of the second filter 141. The second frequency reducer 143 performs the frequency reduction on the second position signal based on a reduction ratio of the reducer, and transmits the second position signal experiencing the frequency reduction to the second filter 141.

The second filter 141 receives the converted first position signal and the second position signal experiencing the frequency reduction, acquires the sixth position signal by fusing the two position signals, and filters the signal whose frequency is less than the first reference frequency in the sixth position signal.

The second filter 141 directly fuses the converted first position signal and the second position signal experiencing the frequency reduction, or weights and sums the converted first position signal and the second position signal experiencing the frequency reduction, which is not limited herein. As the second filter 141 filters the signal whose frequency is less than the first reference frequency in the sixth position signal, the second filter 141 is a high-pass filter.

In the embodiments of the present application, the first position signal is converted by the signal converter, the frequency reduction is performed on the second position signal by the frequency reducer, the sixth position signal is acquired by fusing the converted first position signal and the second position signal experiencing the frequency reduction, the high-pass filter filters the signal whose frequency is less than the first reference frequency in the sixth position signal, and then the first position signal is fused with the filtered sixth position signal. In the embodiments, the third position signal is acquired by the signal converter, the frequency reducer, and the high-pass filter, and thus the effects the same as that of the first implementation are achieved.

**In the third implementation,** the first speed signal and the second speed signal are fused only using a low-pass filter.

Referring to FIG. 6, the filter and fuser device 1 includes a third signal fuser 15 and a fourth filter assembly 16.

An input terminal of the fourth filter assembly 16 and an input terminal of the third signal fuser 15 are electrically connected to the joint module 4, an output terminal of the fourth filter assembly 16 is electrically connected to the input terminal of the third signal fuser 15, and an output terminal of the third signal fuser 15 is electrically connected to an input terminal of the first controller 2.

The fourth filter assembly 16 is configured to convert the second position signal, fuse the converted second position signal and the first position signal to acquire a seventh position signal, and filter a signal whose frequency is greater than a first reference frequency in the seventh position signal.

The third signal fuser 15 is configured to fuse the second position signal and the filtered seventh position signal to acquire the third position signal.

In the embodiments, the input terminal of the fourth filter assembly 16 is electrically connected to the first sensor and the second sensor, and the input terminal of the third signal fuser 15 is further electrically connected to the second sensor. That is, the first sensor and the second sensor respectively transmit the first position signal and the second position signal to the fourth filter assembly 16.

The fourth filter assembly 16 receives the first position signal and the second position signal, acquires the second position signal experiencing the frequency reduction by performing the frequency reduction on the second position signal, converts the second position signal experiencing the frequency reduction, acquires the seventh position signal by fusing the converted second position signal and the first position signal, and filters the signal whose frequency is greater than the first reference frequency in the seventh position signal.

It can be seen that the fourth filter assembly 16 implements a plurality of functions. In the embodiments of the present application, above functions are implemented by a device or a plurality of devices, which is not limited herein.

In the case that above functions are implemented by a device, the fourth filter assembly 16 is a low-pass filter, such that above functions are implemented by only the low-pass filter, and the cost is reduced.

In the case that above functions are implemented by a plurality of devices, the signal converter 142 in the second implementation is referred to as the first signal converter, and the fourth filter assembly 16 includes a fourth filter 161, a second signal converter 162, and a third frequency reducer 163.

An input terminal of the third frequency reducer 163 and an input terminal of the fourth filter 161 are electrically connected to the joint module 4, an output terminal of the third frequency reducer 163 is electrically connected to an input terminal of the second signal converter 162 and the input terminal of the third signal fuser 15, an output terminal of the second signal converter 162 is electrically connected to the input terminal of the fourth filter 161, and an output terminal of the fourth filter 161 is electrically connected to the input terminal of the third signal fuser 15.

The third frequency reducer 163 performs the frequency reduction on the second position signal based on the reduction ratio of the reducer, and transmits the second position signal experiencing the frequency reduction to the second signal converter 162 and the third signal fuser 15.

The second signal converter 162 converts the second position signal experiencing the frequency reduction, and transmits the converted second position signal to the fourth filter 161.

The fourth filter 161 acquires the seventh position signal by fusing the converted second position signal and the first position signal, filters the signal whose frequency is greater than the first reference frequency in the seventh position signal, and transmits the filter seventh position signal to the third signal fuser 15.

The third signal fuser 15 acquires the third position signal by fusing the second position signal experiencing the frequency reduction and the filter seventh position signal.

The third signal fuser 15 directly fuses the second position signal experiencing the frequency reduction and the filter seventh position signal, or weights and sums the second position signal experiencing the frequency reduction and the filter seventh position signal, which is not limited herein. Likewise, the fourth filter 161 directly fuses the converted second position signal and the first position signal, or weights and sums the converted second position signal and the first position signal, which is not limited herein. As the fourth filter 161 filters the signal whose frequency is greater than the first reference frequency in the seventh position signal, the fourth filter 161 is a low-pass filter.

In the embodiments of the present application, the frequency reduction is performed on the second position signal by the frequency reducer, the second position signal experiencing the frequency reduction is converted by the signal converter, the seventh position signal is acquired by fusing the converted second position signal and the first position signal, the signal whose frequency is greater than the first reference frequency in the seventh position signal is filtered by the low-pass filter, and the second position signal experiencing the frequency reduction is fused with the filter seventh position signal. In the embodiments, the third position signal is acquired by the signal converter, the low-pass filter, and the frequency reducer, and thus the effects the same as that of the first implementation are achieved.

It should be noted that the control circuit according to the embodiments of the present application may be practiced by hardware or software. In the case that the control circuit is practiced by hardware, the first controller, the second controller, the filter, the frequency reducer, the signal fuser, and the signal converter mentioned above are physical devices. In the case that the control circuit is practiced by software, the first controller, the second controller, and the like mentioned above are program codes.

In summary, the control circuit perform the filtering and fusing process on the first position signal and the second position signal using the filter and fuser device 1 to acquire the third position signal. As the first position signal indicates the position corresponding to the revolute angle input by the joint in the joint module 4, and the second position signal indicates the position corresponding to the revolute angle input by the reducer in the joint module 4, the third position signal acquired by performing the filtering and fusing process on the first position signal and the second position signal accurately indicates the position corresponding to the revolute angle actually output by the reducer, such that the deviation between the third position signal and the predetermined target position signal is reduced based on the third position signal, the joint module 4 is accurately controlled, and the accuracy of the motion of the joint module 4 is improved.

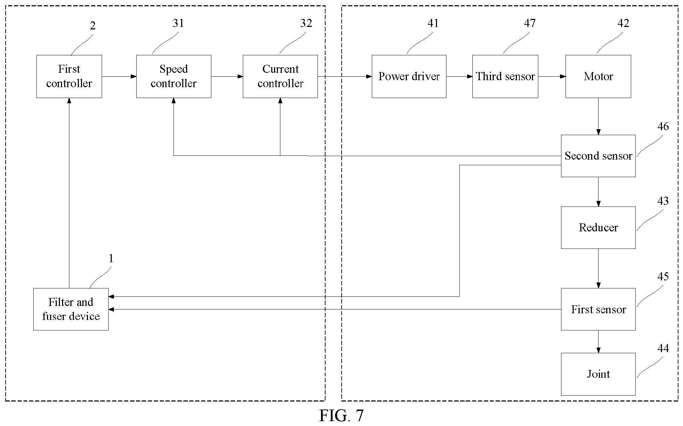

FIG. 7 is a schematic diagram of a robot according to some embodiments of the present application. Referring to FIG. 7, the robot includes a joint module 4 and the control circuit according to any above embodiment.

An input terminal of the joint module 4 is electrically connected to the second controller 3, and an output terminal of the joint module 4 is electrically connected to an input terminal of the filter and fuser device 1.

FIG. 1 to FIG. 6 describe the control circuit in detail, which is not repeater herein. The joint module 4 is described hereinafter. The joint module 4 includes: a power driver 41, a motor 42, a reducer 43, and a joint 44)that are electrically connected in sequence.

A first sensor 45 is disposed between the reducer 43 and the joint 44, and is configured to generate a first position signal based on a sensed revolute angle input by the joint 44 and transmit the first position signal to the filter and fuser device 1.

A second sensor 46 is disposed between the motor 42 and the reducer 43, and is configured to generate a second position signal based on a sensed revolute angle input by the reducer 43 and transmit the second position signal to the filter and fuser device 1.

A third sensor 47 is disposed between the power driver 41 and the motor 42, and is configured to generate a current signal based on a magnitude of a sensed current input by the motor 42 and transmit the current signal to the second controller 3.

In the embodiments of the present application, the reducer 41 is capable of changing a high revolution speed and low driving torque motion of the motor to a low speed and high driving torque motion, and driving the joint for motion. The type of the reducer 41 is set and changeable based on needs. For example, the reducer 41 is a harmonic reducer 41 or a gear reducer 41, which is not limited herein. As an object may be deformed at varying degrees when subjected to the external force, the actual output of the reducer 41 always deviates from the theoretical output when the output terminal of the reducer 41 is subjected to a torque. The deviation is a flexibility error of the reducer 41. In addition, in the case that the reducer drives the joint for motion, a gap is defined in the mechanical structure, which is a backlash gap of the reducer 41.

Due to the backlash gap and the flexibility factor of the reducer, revolution of the motor 42 and revolution of the reducer 41 are out of sync. On this basis, the first sensor 45 is disposed between the motor 42 and the reducer 41, and the second sensor 46 is disposed between the reducer 43 and the joint 44, such that the third position signal is generated based on the first position signal generated by the first sensor 45 and the second position signal generated by the second sensor 46. The third position signal is determined as the closed-loop feedback information of the position control loop. The deviation between the predetermined target position signal and the third position signal is reduced based on the third position signal, such that the higher gain of the position control loop is acquired on the premise that the stability is improved, the impact of the flexibility factor and the backlash gap of the reducer 41 are reduced, and the dynamic stability and the steady-state accuracy of the joint 44 are improved.

The types of the first sensor 45, the second sensor 46, and the third sensor 47 are set and changeable based on needs. For example, the first sensor 45 and the second sensor 46 are devices capable of detecting the revolute angle of the joint, such as shaft encoders or potentiometers, and the third sensor 47 is a current sensor or other device capable of detecting the magnitude of the current. The embodiments of the present application do not limit the types of the first sensor 45, the second sensor 46, and the third sensor 47.

FIG. 1 to FIG. 6 describe the filter and fuser device 1 in detail, which is not repeater herein.

In the embodiments of the present application, referring to FIG. 7, the second controller 3 includes a speed controller 31 and a current controller 32. An input terminal of the speed controller 31 is electrically connected to the first controller 2 and the second sensor 46, and output terminal of the speed controller 31 is electrically connected to an input terminal of the current controller 32, the input terminal of the current controller 32 is further electrically connected to the second sensor 46, and output terminal of the current controller 32 is electrically connected to the power driver 41.

The second sensor 46 senses the revolute angle input by the reducer 43 and the revolution speed output by the motor 43, generates the second speed signal based on the revolution speed, and transmits the second speed signal to the speed controller 31.

The first controller 2 transmits the first speed signal to the speed controller 31, and the speed controller 31 generates the first current signal based on the first speed signal and the second speed signal.

The third sensor transmits the second current signal to the current controller 32, the second sensor 46 transmits the commutation signal to the current controller 32, and the current controller 32 generates the control signal based on the first current signal, the second current signal, and the commutation signal and controls the joint module 4 by the control signal.

It should be noted that the robot is a robot for assembling a terminal, a robot for processing household appliances, or a robot in other fields, which is not limited herein.

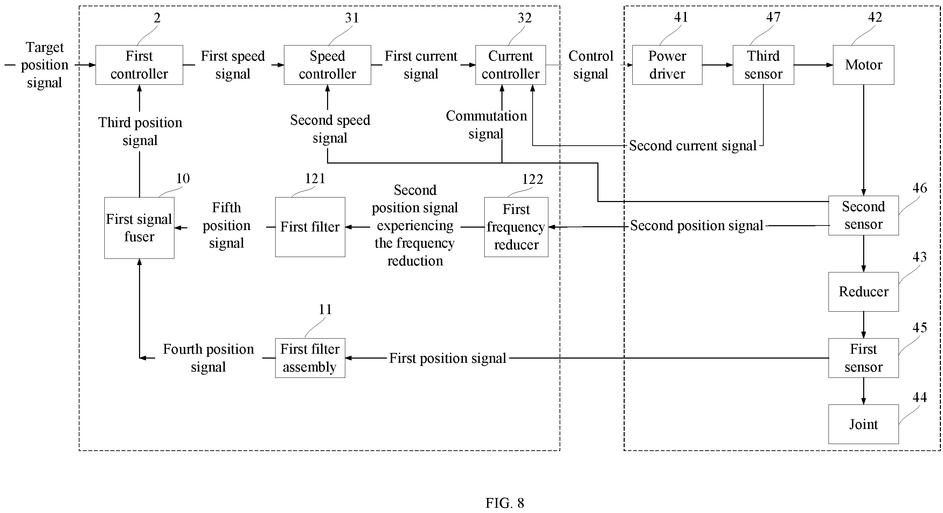

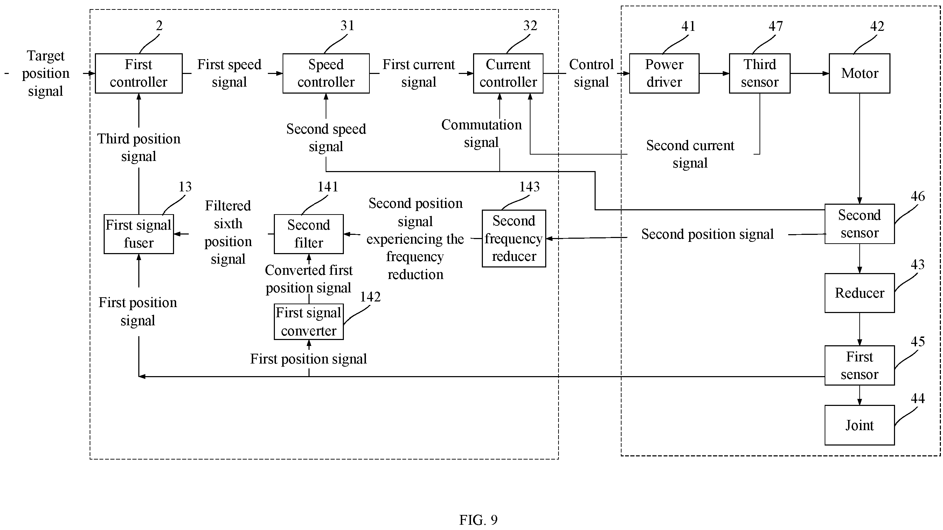

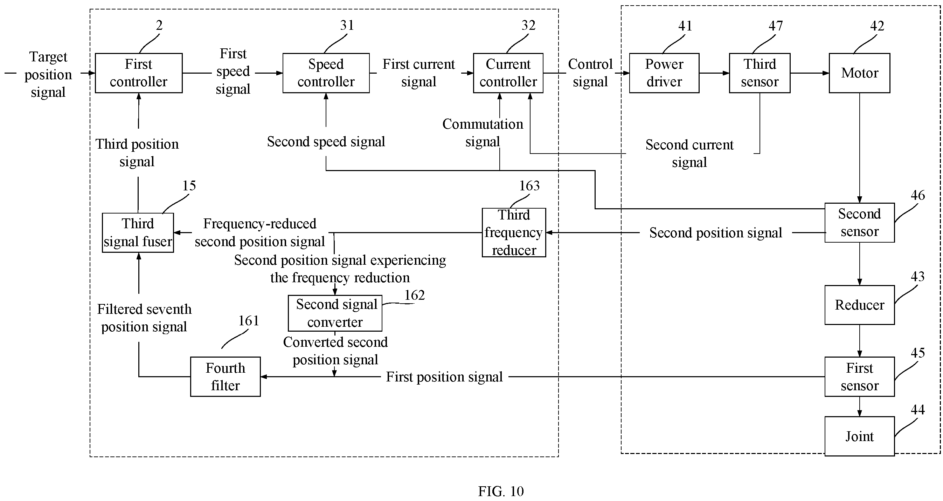

In the case that the filter and fuser device 1 performs the filtering and fusing process on the first position signal and the second position signal in the first implementation, the method for controlling the joint module by the control circuit is illustrated in FIG. 8. In the case that the filter and fuser device 1 performs the filtering and fusing process on the first position signal and the second position signal in the second implementation, the method for controlling the joint module by the control circuit is illustrated in FIG. 9. In the case that the filter and fuser device 1 performs the filtering and fusing process on the first position signal and the second position signal in the third implementation, the method for controlling the joint module by the control circuit is illustrated in FIG. 10.

The embodiments of the present application provide a robot. The robot includes the joint module 4 and the control circuit for the joint module. As the filter and fuser device 1 is disposed in the control circuit, the joint module 4 is accurately controlled by the filter and fuser device 1, such that the accuracy of the motion of the joint module 4 is improved, and the motion of the robot is further improved.

In the description of the control circuit for the joint module, the filtering and fusing process is performed on the first position signal and the second position signal in three implementations, and the three implementations correspond to three different methods for controlling the joint module. The controlling method corresponding to the first implementation is illustrated hereinafter.

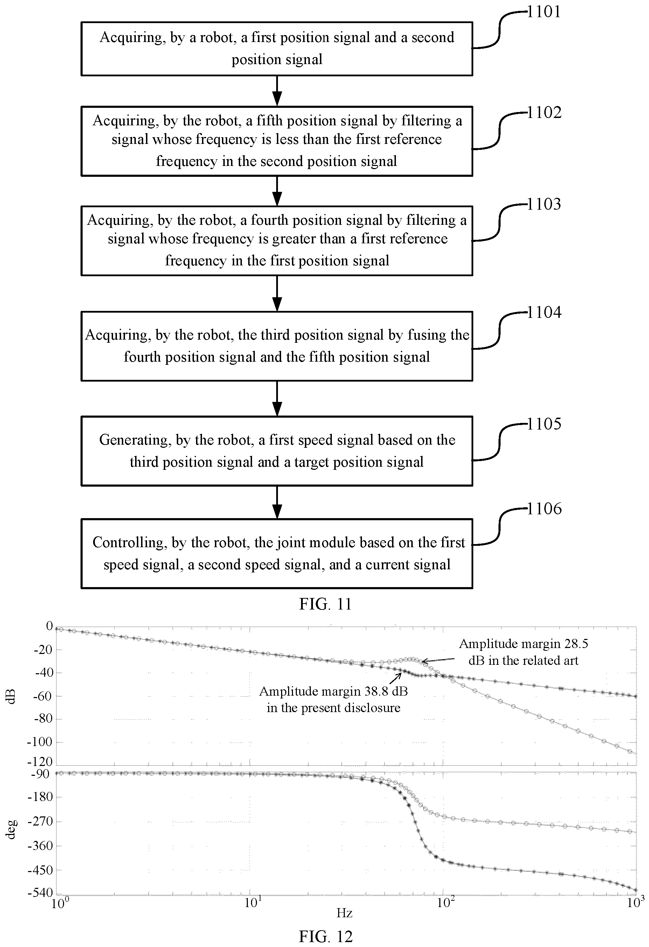

FIG. 11 is a flowchart of a method for controlling a joint module according to some embodiments of the present application. The method is applicable to a robot. Referring to FIG. 11, the method includes the following processes.

In S1101, a robot acquires a first position signal and a second position signal.

The first position signal indicates a position corresponding to a revolute angle input by a joint in the joint module, and the second position signal indicates a position corresponding to a revolute angle input by a reducer.

In the process, the robot acquires the first position signal transmitted by the first sensor and the second position signal transmitted by the second sensor. The first sensor is disposed between the reducer and the joint, and the second sensor is disposed between the motor and the reducer.

**In S1102, the robot acquires a fifth position signal by filtering a signal whose frequency is less than a first reference frequency in the second position signal.**

In the process, the robot performs the frequency reduction on the second position signal, and then filters the signal. Correspondingly, the process is implemented by process (1) and (2).

> (1) The robot acquires the second position signal experiencing the frequency reduction by performing the frequency reduction on the second position signal based on a reduction ratio of the reducer.

The reduction ratio indicates a ratio of the revolution speed input by the reducer and the revolution speed output by the reducer. As the input revolution speed is greater than the output revolution speed, the reduction ratio is greater than 1. The robot first determines the reciprocal of the reduction ratio and the frequency range corresponding to the second position signal, and then determines the product of the frequency range and the reciprocal of the reduction ratio to acquire the second position signal experiencing the frequency reduction.

The second position signal experiencing the frequency reduction is represented by $\frac{1}{N}\theta_2$. $\theta_2$ represents the second position signal, and $N$ represents the reduction ratio.

As the reduction ratio is greater than 1, the reciprocal of the reduction ratio is less than 1. Thus, the frequency range corresponding to the second position signal acquired by processing the second position signal based on the reciprocal of the reduction ratio is less than the frequency range prior to the frequency reduction.

(2) The robot acquires the fifth position signal by filtering the signal whose frequency is less than the first reference frequency in the second position signal experiencing the frequency reduction.

The robot performs high-pass filtering on the second position signal experiencing the frequency reduction using the high-pass filter to filter the signal whose frequency is less than the first reference frequency in the second position signal experiencing the frequency reduction and acquires the fifth position signal. The high-pass filter is a first filter in the filter and fuser device.

In the embodiments of the present application, the high-pass filter is a first-order filter or a second-order filter, or other filter in higher order, and the embodiments are illustrated using an example where the high-pass filter is a first-order filter or a second-order filter.

In the case that the high-pass filter is a first-order filter, the process of acquiring the fifth position signal by the robot includes: acquiring a filtering time parameter, and acquiring the fifth position signal by filtering the signal whose frequency is less than the first reference frequency by filtering the second position signal experiencing the frequency reduction based on the filtering time parameter using a first Laplace operator.

In the embodiments, the filtering time parameter indicates a bandwidth of the high-pass filter, and is a time constant of the high-pass filter, which is determined based on a sampling period and a filtering time.

In the embodiments, the transfer function of the first-order high-pass filter is:

$$G_{HPF1} = \frac{\tau s_1}{\tau s_1 + 1};$$

$G_{HPF1}$ represents the transfer function of the first-order high-pass filter, $\tau$ represents the filtering time parameter, and $S_1$ represents the first Laplace operator. The first Laplace operator is a function corresponding to the first reference frequency.

In the case that the high-pass filter is a second-order filter, the process of acquiring the fifth position signal by the robot includes: acquiring a natural oscillation angular frequency parameter and a damping ratio parameter, and acquiring the fifth position signal by filtering the signal whose frequency is less than the first reference frequency by filtering on the second position signal experiencing the frequency reduction based on the natural oscillation angular frequency parameter and the damping ratio parameter using a second Laplace operator. The natural oscillation angular frequency parameter indicates an angular frequency of oscillation in a case that a damping is 0, and the damping ratio parameter indicates a degree of energy dissipation in an oscillation process.

In the embodiments, the transfer function of the second-order high-pass filter is:

$$G_{HPF2} = \frac{s_2^2 + 2\zeta\omega s_2}{s_2^2 + 2\zeta\omega s_2 + \omega^2};$$

$G_{HPF2}$ represents the transfer function of the first-order high-pass filter, $\omega$ represents the natural oscillation angular frequency parameter, $\zeta$ represents the damping ratio parameter, and $S_2$ represents the second Laplace operator. The second Laplace operator is a function corresponding to the first reference frequency.

In summary, the fifth position signal acquired in S1102 is represented by: $\frac{1}{N} G_{HPF}\theta_2$. $\theta_2$ represents the second position signal, and $G_{HPF}$ is $G_{HPF1}$ or $G_{HPF2}$, which is not limited herein.

The first reference frequency is set and changeable based on needs, which is not limited herein.

**In S1103, the robot acquires a fourth position signal by filtering a signal whose frequency is greater than a first reference frequency in the first position signal.**

The robot performs low-pass filtering on the first position signal using the low-pass filter to filter the signal whose frequency is greater than the first reference frequency in the first position signal and acquires the fourth position signal. The low-pass filter is a third filter in the filter and fuser device.

In the case that the high-pass filter is a first-order filter, the low-pass filter is also a first-order filter. In the case that the high-pass filter is a second-order filter, the low-pass filter is also a second-order filter. In addition, in description of the control circuit for f the joint module, it has been described that the high-pass filter and the low-pass filter are complementary filters in the case that the high-pass filter and the low-pass filter fuse the first position signal and the second position signal concurrently, and the transfer function of the complementary filters meets $G_{HPF} + G_{LPF} = 1$.

On this basis, in the case that the high-pass filter and the low-pass filter are the first-order filters, the transfer function of the first-order filter is determined based on $G_{HPF} + G_{LPF} = 1$ and $G_{HPF1} = \frac{\tau s_1}{\tau s_1 + 1}$, that is, $G_{LPF1} = \frac{1}{\tau s_1 + 1}$. It can be seen that the robot performs the low-pass filtering on the first position signal based on the filtering time parameter and the first Laplace operator.

In the case that the high-pass filter and the low-pass filter are the second-order filters, the transfer function of the second-order filter is determined based on $G_{HPF} + G_{LPF} = 1$ and $G_{HPF2} = \frac{s_2^2 + 2\zeta\omega s_2}{s_2^2 + 2\zeta\omega s_2 + \omega^2}$, that is, $G_{LPF2} = \frac{\omega^2}{s_2^2 + 2\zeta\omega s_2 + \omega^2}$. It can be seen that the robot performs the low-pass filtering on the first position signal based on the natural oscillation angular frequency parameter, the damping ratio parameter, and the first Laplace operator.

In summary, the fifth position signal acquired in S1103 is represented by: $G_{LPF}\theta_1$. $\theta_1$ represents the first position signal, and $G_{LPF}$ is $G_{LPF1}$ or $G_{LPF2}$, which is not limited herein.

In the embodiments of the present application, the first filter has high-pass filtering characteristics, the third filter has low-pass filtering characteristics, and the transfer function meets $G_{HPF} + G_{LPF} = 1$, which all fall within the scope of protection of the present application.

It should be noted that the robot performs S1102 and then 1103, or performs S1103 and then S1102, or performed S1102 and S1103 concurrently, which is not limited herein.

**S1104, the robot acquires the third position signal by fusing the fourth position signal and the fifth position signal.**

In the process, the robot acquires the third position signal by directly summing the fourth position signal and the fifth position signal. Correspondingly, the third position signal is represented by

$$\theta = \frac{1}{N}G_{HPF}\theta_2 + G_{LPF}\theta_1$$

. $\theta$ represents the third position signal.

Alternatively, the robot acquires a first weight of the fourth position signal and a first weight of the fifth position signal, and weighs and sums the fourth position signal and the fifth position signal based on the first weight and the second weight.

In the case that the fourth position signal and the fifth position signal are weighted and summed, a weight of the fourth position signal and a weight of the fifth position signal are set and changeable based on needs. For example, the weight of the fourth speed signal is greater than the weight of the fifth position signal, or the weight of the fourth speed signal is less than the weight of the fifth position signal, which is not repeated in the embodiments of the present application.

In the embodiments of the present application, it can be seen from the formula representing the third position signal that when the joint is in a dynamic state, that is, when the position of the joint changes significantly, the high-pass filter provides a higher gain to the second sensor, such that the second position signal account for a larger ratio, which improves the stability of the joint in the dynamic state. In addition, when the joint is in a steady state, that is, when the position of the joint is stable at a point, the low-pass filter provides a higher gain to the first sensor, such that the first position signal account for a larger ratio, which improves the steady-state accuracy. Therefore, the combination of the high-pass filter and the low-pass filter improves the overall performance of the joint.

In the embodiments of the present application, a new position signal is acquired by performing the filtering and fusing process on the first position signal and the second position signal in the frequency domain, and is introduced into the position control loop as the closed-loop feedback information, such that the bandwidth and stability of the position control loop are effectively improved, and the dynamic response and steady-state accuracy of the joint are further improved.

Referring to FIG. 12, it can be seen from FIG. 12 that due to the flexibility factor of the reducer, the amplitude frequency curve in the related art shows a significant upward trend at the frequency point where the phase frequency curve crosses -180deg, which may reduce the relative stability of the position control loop and limit the gain of the first controller. The amplitude frequency curve according to the embodiments of the present application is significantly lower than the amplitude frequency curve in the related art at the frequency point where the phase frequency curve crosses -180deg, such that the amplitude margin (18.8 dB) in the embodiments of the present application is greater than the amplitude margin (8.5 dB) in the related art. The amplitude margin refers to the margin degree of the amplitude, that is, the maximum allowable deviation. On the premise of the stability of the position control loop, the higher the amplitude margin, the greater the gain of the controller. Thus, it can be seen that the method according to the embodiments of the present application may change the loop characteristics of the position control loop, suppress the flexibility caused by the reducer, improve the amplitude margin of the position control loop, and increase the gain and the bandwidth of the controller set for the position control loop on the premise of the stability of the position control loop, such that the dynamic performance and steady-state accuracy of the joint are significantly improved.

**In S1105, the robot generates a first speed signal based on the third position signal and a target position signal.**

The third position signal indicates a revolute angle actually output by the reducer, and the target position signal indicates a revolute angle theoretically output by the reducer.

The robot adjusts the target position signal based on the third position signal to reduce the deviation between the third position signal and the target position signal, and generates the first speed signal based on the deviation. The first speed signal indicates the revolution speed input by the motor.

**In S1106, the robot controls the joint module based on the first speed signal, a second speed signal, and a current signal.**

The second speed signal indicates a revolution speed output by the motor, and the current signal indicates a magnitude of a current input by the motor.

In some embodiments, the robot determines the second speed signal as closed-loop feedback information of the speed control loop. Correspondingly, the robot generates a first current signal based on the first speed signal and the second speed signal. The first current signal indicates a magnitude of a current theoretically input by the motor.

For convenient distinction, the current signal corresponding to the magnitude of the current input by the motor is referred to as a second current signal, and the second current signal indicates a magnitude of a current actually input by the motor. The robot generates the control signal based on the first circuit signal and the second current signal, and controls the revolute angle and the revolution speed of the joint module based on the control signal.

In the embodiments, the robot adjusts the first speed signal based on the second speed signal to reduce the deviation between the first speed signal and the second speed signal, and generates the first current signal based on the deviation. The robot adjusts the first current signal based on the second current signal to reduce the deviation between the first current signal and the second current signal, generates the control signal based on the deviation, and controls the revolute angle and the revolution speed of the joint module based on the control signal.

In some embodiments, the robot determines the fourth speed signal acquired by fusing the second speed signal and the third speed signal as the closed-loop feedback information of the speed control loop, and the third speed signal indicates the revolution speed input by the joint. Accordingly, in addition to the first position signal, the first sensor also transmits the third speed signal, and the robot generates the fourth speed signal based on the second speed signal and the third speed signal and determines the fourth speed signal as the closed-loop feedback information of the speed control loop. The robot generates the first current signal based on the fourth speed signal and the first speed signal, generates the control signal based on the first current signal and the second current signal, and controls the revolute angle and the revolution speed of the joint module based on the control signal.

In the embodiments, the robot directly fuses the second speed signal and the third speed signal to acquire the fourth speed signal, weights and sums the second speed signal and the third speed signal to acquire the fourth speed signal, or performs the filtering and fusing process on the second speed signal and the third speed signal to acquire the fourth speed signal, which is not limited herein.

In the case that the second speed signal and the third speed signal are weighted and summed, a weight of the second speed signal and a weight of the third speed signal are set and changeable based on needs. For example, the weight of the second speed signal is greater than the weight of the third speed signal, or the weight of the second speed signal is less than the weight of the third speed signal. In the case that the filtering and fusing process is performed on the second speed signal and the third speed signal, the process is similar to the filtering and fusing process on the first position signal and the second position signal in the present application, which is not repeated herein.

In the embodiments of the present application, the position signal controls the position corresponding to the revolute angle of the joint, and the speed signal controls the revolution speed of the joint. The robot converts the position signal to the speed signal, converts the speed signal to the current signal, converts the current signals to the control signal, and controls the revolute angle and the revolution speed of the joint module based on the control signal.

The embodiments of the present application provide a method for controlling the joint module. In the method, the fourth position signal and the fifth position signal are acquired by filtering the signal whose frequency is greater than the first reference frequency in the first position signal and the signal whose frequency is less than the first reference frequency in the second position signal, and the third position signal is acquired by fusing the fourth position signal and the fifth position signal. The third position signal accurately indicates the position corresponding to the revolute angle actually output by the reducer, such that the deviation between the third position signal and the predetermined target position signal is reduced based on the third position signal, the joint module is accurately controlled, and the accuracy of the motion of the joint module is improved.

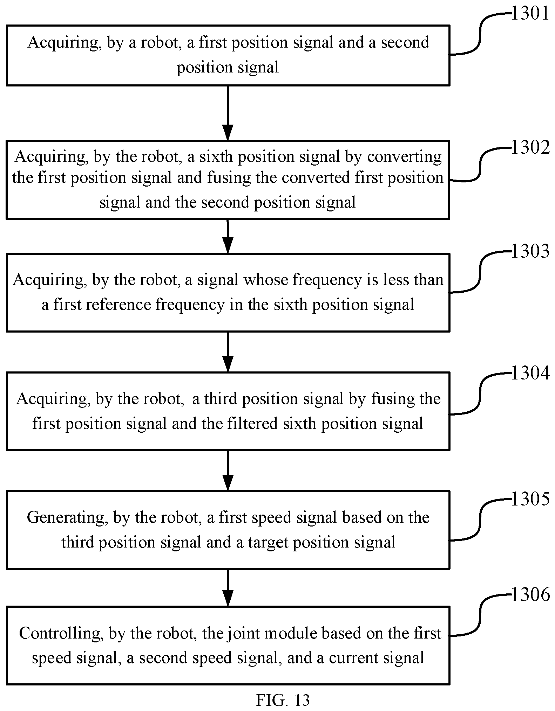

The controlling method corresponding to the second implementation is illustrated hereinafter. FIG. 13 is a flowchart of a method for controlling a joint module according to some embodiments of the present application. The method is applicable to a robot. Referring to FIG. 13, the method includes the following processes.

**In S1301, a robot acquires a first position signal and a second position signal.**

S1301 is the same as S1101, which is not repeated herein.

**In S1302, the robot acquires a sixth position signal by converting the first position signal and fusing the converted first position signal and the second position signal.**

The robot may convert the first position signal using a signal converter or in other modes to acquire the converted first position signal, and the mode for converting the first position signal is not limited in the embodiments of the present application.

The frequency range corresponding to the first position signal is opposite to the frequency range corresponding to the converted first position signal. For example, the frequency range corresponding to the first position signal is from f1 to f2, and the frequency range corresponding to the converted first position signal is from -f2 to -f1.

Prior to fusing the converted first position signal and the second position signal, the robot acquires the second position signal experiencing the frequency reduction by performing the frequency reduction on the second position signal based on the reduction ratio of the reducer, and then acquires the sixth position signal by fusing the converted first position signal and the second position signal experiencing the frequency reduction.

The method for performing the frequency reduction on the second position signal by the robot is the same as the process (1) in S1102, which is not repeated herein. In addition, in the signal fusion process, the robot directly fuses the converted first position signal and the second position signal experiencing the frequency reduction, or weights and sums the converted first position signal and the second position signal experiencing the frequency reduction, which is not limited herein.

In the case that the converted first position signal and the second position signal experiencing the frequency reduction are weighted and summed, a weight of the converted first position signal and a weight of the second position signal experiencing the frequency reduction are set and changeable based on needs. For example, the weight of the converted first position signal is greater than the weight of the second position signal, or the weight of the converted first position signal is less than the weight of the second position signal experiencing the frequency reduction, which is not repeated in the embodiments of the present application.

**In S1303, the robot filters a signal whose frequency is less than a first reference frequency in the sixth position signal.**

The robot acquires the filtered sixth position signal by filtering the signal whose frequency is less than the first reference frequency in the sixth position signal using the high-pass filter.

In the embodiments of the present application, the high-pass filter is a first-order filter or a second-order filter, or other filter in higher order, and the embodiments are illustrated using an example where the high-pass filter is a first-order filter or a second-order filter.

It can be seen from 1102 that in the case that the high-pass filter is the first-order filter, the transfer function of the first-order high-pass filter is $G_{HPF1} = \frac{\tau s_1}{\tau s_1 + 1}$ ; and in the case that the high-pass filter is a second-order filter, the transfer function of the second-order high-pass filter is

$$G_{HPF2} = \frac{s_2^2 + 2\zeta \omega s_2}{s_2^2 + 2\zeta \omega s_2 + \omega^2}.$$

Thus, the robot acquires the filtered sixth position signal by filtering the sixth position signal based on $G_{HPF1}$ or $G_{HPM2}$.

**In S1304, the robot acquires the third position signal by fusing the first position signal and the filtered sixth position signal.**

In the embodiments of the present application, the robot directly fuses the first position signal and the filtered sixth position signal, or weights and sums the first position signal and the filtered sixth position signal, which is not limited herein.

In the case that the first position signal and the filtered sixth position signal are weighted and summed, a weight of the first position signal and a weight of the filtered sixth position signal are set and changeable based on needs. For example, the weight of the first position signal is greater than the weight of the filtered sixth position signal, or the weight of the first position signal is less than the weight of the filtered sixth position signal, which is not repeated in the embodiments of the present application.

In description of the controlling method corresponding to the first implementation, it has been described that the high-pass filter and the low-pass filter are complementary filters, the transfer function of the complementary filters meets $G_{HPF} + G_{LPF} = 1$, and the third position signal in S1104 meets $\theta = \frac{1}{N} G_{HPF}\theta_2 + G_{LPF}\theta_1$ . Based on the two formulas, in the case that only the high-pass filter is used, the third position signal is:

$$\theta = \frac{1}{N} G_{HPF}\theta_2 + (1 - G_{HPF})\theta_1$$
$$= \theta_1 + G_{HPF}\left(\frac{1}{N}\theta_2 - \theta_1\right) ;$$

$\theta_1$ is the first position signal, and $\theta_2$ is the second position signal.

It can be seen from the formula that the robot first acquires $-\theta_1$ by converting the first position signal, acquires the sixth position signal $\left(\frac{1}{N}\theta_2 - \theta_1\right)$ by fusing the second position signal $\frac{1}{N}\theta_2$ experiencing the frequency reduction and the converted first position signal $-\theta_1$, acquires the filtered sixth position signal $G_{HPF}\left(\frac{1}{N}\theta_2 - \theta_1\right)$ by filtering the sixth position signal, and acquires the third position signal $\theta$ by fusing the filtered sixth position signal $G_{HPF}\left(\frac{1}{N}\theta_2 - \theta_1\right)$ and the first position signal $\theta_1$. $G_{HPF}$ is $G_{HPF1}$ or $G_{HPF2}$. It can be seen that the effects achieved by performing S1302 to S1304 are the same as the effects achieved by performing S1102 to S1104.

**In S1305, the robot generates a first speed signal based on the third position signal and a target position signal.**

**In S1306, the robot controls the joint module based on the first speed signal, a second speed signal, and a current signal.**

S1305 and S1306 are respectively the same as S1105 and S1106, which are not repeated herein.

The embodiments of the present application provide a method for controlling the joint module. In the method, the first position signal is first converted, the sixth position signal is acquired by fusing the converted first position signal and the second position signal experiencing the frequency reduction, the filtered sixth position signal is acquired by filtering the signal whose frequency is less than the first reference frequency in the sixth position signal, and the third position signal is acquired by fusing the first position signal and the filtered sixth position signal. The third position signal accurately indicates the position corresponding to the revolute angle actually output by the reducer, such that the deviation between the third position signal and the predetermined target position signal is reduced based on the third position signal, the joint module is accurately controlled, and the accuracy of the motion of the joint module is improved.

The controlling method corresponding to the third implementation is illustrated hereinafter.

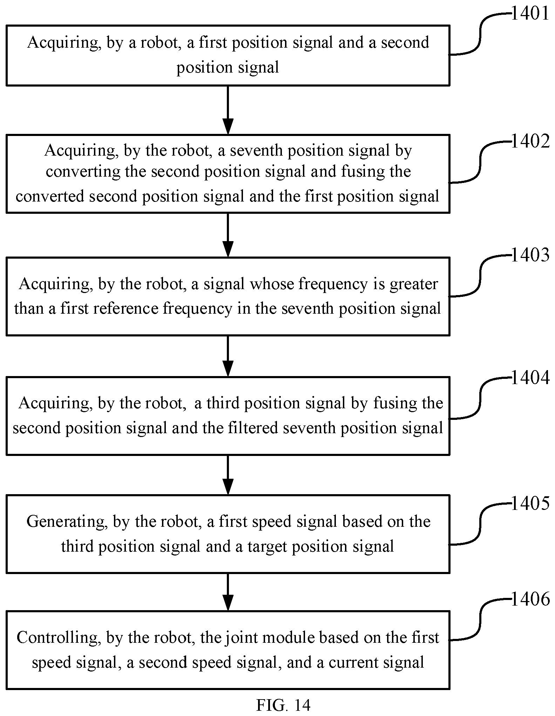

FIG. 14 is a flowchart of a method for controlling a joint module according to some embodiments of the present application. The method is applicable to a robot. Referring to FIG. 14, the method includes the following processes.

**In S1401, a robot acquires a first position signal and a second position signal.**

S1401 is the same as S1101, which is not repeated herein.

**In S1402, the robot acquires a seventh position signal by converting the second position signal and fusing the converted second position signal and the first position signal.**

In the process, the robot acquires the second position signal experiencing the frequency reduction by performing the frequency reduction on the second position signal based on the reduction ratio of the reducer, and acquired the converted second position signal by converting the second position signal experiencing the frequency reduction.

The process of performing the frequency reduction on the second position signal by the robot is the same as the process (1) in S1102, and the process of converting the second position signal experiencing the frequency reduction is the same as the process of converting the first position signal in S1302, which is not repeated herein.

After acquiring the converted second position signal, the robot directly fuses the converted second position signal and the first position signal, or weights and sums the converted second position signal and the first position signal, which is not limited herein.

In the case that the converted second position signal and the first position signal are weighted and summed, a weight of the converted second position signal and a weight of the first position signal are set and changeable based on needs. For example, the weight of the converted second position signal is greater than the weight of the first position signal, or the weight of the converted second position signal is less than the weight of the first position signal, which is not repeated in the embodiments of the present application.

**In S1403, the robot filters a signal whose frequency is greater than a first reference frequency in the seventh position signal.**

The robot acquires the filtered seventh position signal by filtering the signal whose frequency is greater than the first reference frequency in the seventh position signal using the low-pass filter.

In the embodiments of the present application, the low-pass filter is a first-order filter or a second-order filter, or other filter in higher order, and the embodiments are illustrated using an example where the high-pass filter is a first-order filter or a second-order filter.

It can be seen from 1103 that in the case that the low-pass filter is the first-order filter, the transfer function of the first-order low-pass filter is $G_{LPF1} = \dfrac{1}{\tau s_1 + 1}$ ; and in the case that the low-pass filter is a second-order filter, the transfer function of the second-order low-pass filter is

$$G_{LPF2} = \frac{\omega^2}{s_2^2 + 2\zeta\omega s_2 + \omega^2}.$$

Thus, the robot acquires the filtered seventh position signal by filtering the seventh position signal based on $G_{LPF1}$ or $G_{LPF2}$.

**In S1404, the robot acquires the third position signal by fusing the second position signal and the filtered seventh position signal.**

The robot acquires the third position signal by fusing the second position signal experiencing the frequency reduction and the filtered seventh position signal. The robot directly fuses the second position signal experiencing the frequency reduction and the filtered seventh position signal, or weights and sums the second position signal experiencing the frequency reduction and the filtered seventh position signal, which is not limited herein.

In the case that the second position signal experiencing the frequency reduction and the filtered seventh position signal are weighted and summed, a weight of the second position signal experiencing the frequency reduction and a weight of the filtered seventh position signal are set and changeable based on needs. For example, the weight of the second position signal experiencing the frequency reduction is greater than the weight of the filtered seventh position signal, or the weight of the second position signal experiencing the frequency reduction is less than the weight of the filtered seventh position signal, which is not repeated in the embodiments of the present application.

In description of the controlling method corresponding to the first implementation, it has been described that the high-pass filter and the low-pass filter are complementary filters, the transfer function of the complementary filters meets $G_{HPF} + G_{LPF} = 1$, and the third position signal in S1104 meets

$$\theta = \frac{1}{N}G_{HPF}\theta_2 + G_{LPF}\theta_1$$

. Based on the two formulas, in the case that only the low-pass filter is used, the third position signal is:

$$\theta = \frac{1}{N}(1 - G_{LPF})\theta_2 + G_{LPF}\theta_1$$
$$= \frac{1}{N}\theta_2 + G_{LPF}\left(\theta_1 - \frac{1}{N}\theta_2\right)$$

It can be seen from the formula that the robot first acquires $\frac{1}{N}\theta_2$ by performing the frequency reduction on the second position signal $\theta_2$, acquires the converted second position signal $-\frac{1}{N}\theta_2$ by converting the signal experiencing the frequency reduction, acquires the seventh position signal $\left(\theta_1 - \frac{1}{N}\theta_2\right)$ by fusing the converted second position signal $-\frac{1}{N}\theta_2$ and the first position signal $\theta_1$, acquires the filtered seventh position signal $G_{LPF}\left(\theta_1 - \frac{1}{N}\theta_2\right)$ by filtering the seventh position signal, and acquires the third position signal $\theta$ by fusing the second position signal $\frac{1}{N}\theta_2$ experiencing the frequency reduction and the filtered seventh position signal $G_{LPF}\left(\theta_1 - \frac{1}{N}\theta_2\right)$. $G_{LPF}$ is $G_{LPF1}$ or $G_{LPF2}$. It can be seen that the effects achieved by performing S1402 to S1404 are the same as the effects achieved by performing S1102 to S1104.

**In S1405, the robot generates a first speed signal based on the third position signal and a target position signal.**

**In S1406, the robot controls the joint module based on the first speed signal, a second speed signal, and a current signal.**

S1405 and S1406 are respectively the same as S1105 and S1106, which are not repeated herein.

The embodiments of the present application provide a method for controlling the joint module. In the method, the second position signal is first converted, the seventh position signal is acquired by fusing the converted second position signal and the first position signal, the filtered seventh position signal is acquired by filtering the signal whose frequency is greater than the first reference frequency in the seventh position signal, and the third position signal is acquired by fusing the second position signal and the filtered seventh position signal. The third position signal accurately indicates the position corresponding to the revolute angle actually output by the reducer, such that the deviation between the third position signal and the predetermined target position signal is reduced based on the third position signal, the joint module is accurately controlled, and the accuracy of the motion of the joint module is improved.

Some embodiments of the present application further provide a computer-readable storage medium. The computer-readable storage medium stores one or more program codes, wherein the one or more program codes, when loaded and executed by a processor, cause the processor to perform the method for controlling the joint module according to any of the above embodiments.

Some embodiments of the present application further provide a computer program product. The computer program product stores one or more program codes, wherein a processor, when loading and executing the one or more program codes, is caused to perform the method for controlling the joint module according to any of the above embodiments.

In some embodiments, the computer program product according to the embodiments of the present application may be deployed on a computer device for execution, on a plurality of computer devices at a location for execution, or on a plurality of computer devices at a plurality of locations and interconnected over a communication network a plurality of. The plurality of computer devices at the plurality of locations and interconnected over the communication network form a blockchain system.

It should be understood by persons of ordinary skill in the art that all or part of the processes in the above-mentioned embodiments may be implemented by hardware, or by a corresponding hardware instructed by a program. The program may be stored in a computer-readable storage medium, and the storage medium mentioned above may be a read-only memory, a magnetic disk, an optical disk, or the like.

Described above are merely exemplary embodiments of the present application, and are not intended to limit the present application. Any modifications, equivalent replacements, improvements and the like made within the spirit and principles of the present application should be encompassed within the scope of protection of the present application.

**Claims**

1. A control circuit for a joint module, comprising: a filter and fuser device (1), a first controller (2), and a second controller (3) that are electrically connected in sequence; wherein

   the filter and fuser device (1) is electrically connected to the joint module (4) and is configured to perform a filtering and fusing process on a first position signal and a second position signal to acquire a third position signal, wherein the first position signal indicates a position corresponding to a revolute angle input by a joint in the joint module (4), the second position signal indicates a position corresponding to a revolute angle input by a reducer in the joint module (4), and the third position signal indicates a position corresponding to a revolute angle actually output by the reducer;

the first controller (2) is configured to generate a first speed signal based on the third position signal and a target position signal, wherein the target position signal indicates a position corresponding to a revolute angle theoretically output by the reducer; and

the second controller (3) is configured to control the joint module (4) based on the first speed signal, a second speed signal, and a current signal, wherein the second speed signal indicates a revolution speed output by a motor in the joint module (4), and the current signal indicates a magnitude of a current input by the motor.

2. The control circuit according to claim 1, wherein the filter and fuser device (1) comprises a first signal fuser (10), a first filter assembly (11), and a second filter assembly (12); wherein

an input terminal of the first filter assembly (11) and an input terminal of the second filter assembly (12) are electrically connected to the joint module (4), an output terminal of the first filter assembly (11) and an output terminal of the second filter assembly (12) are electrically connected to an input terminal of the first signal fuser (10), and an output terminal of the first signal fuser (10) is electrically connected to an input terminal of the first controller (2);

the first filter assembly (11) is configured to filter a signal whose frequency is greater than a first reference frequency in the first position signal to acquire a fourth position signal;

the second filter assembly (12) is configured to filter a signal whose frequency is less than the first reference frequency in the second position signal to acquire a fifth position signal; and

the first signal fuser (10) is configured to fuse the fourth position signal and the fifth position signal to acquire the third position signal.

3. The control circuit according to claim 2, wherein the second filter assembly (12) comprises a first filter (121) and a frequency reducer (122); wherein

an input terminal of the frequency reducer (122) is electrically connected to the joint module (4),

an output terminal of the frequency reducer (122) is electrically connected to an input terminal of the first filter (121), and an output terminal of the first filter (121) is electrically connected to the input terminal of the first signal fuser (10);

the frequency reducer (122) is configured to perform frequency reduction on the second position signal based on a reduction ratio of the reducer; and

the first filter (121) is configured to filter the signal whose frequency is less than the first reference frequency in the second position signal experiencing the frequency reduction to acquire the fifth position signal.

4. The control circuit according to claim 1, wherein the filter and fuser device (1) comprises a second signal fuser (13) and a third filter assembly (14); wherein

an input terminal of the third filter assembly (14) is electrically connected to the joint module (4), an output terminal of the third filter assembly (14) is electrically connected to an input terminal of the second signal fuser (13), the input terminal of the second signal fuser (13) is further electrically connected to the joint module (4), and an output terminal of the second signal fuser (13) is electrically connected to an input terminal of the first controller (2);

the third filter assembly (14) is configured to convert the first position signal, fuse the converted first position signal and the second position signal to acquire a sixth position signal, and filter a signal whose frequency is less than a first reference frequency in the sixth position signal; and

the second signal fuser (13) is configured to fuse the first position signal and the filtered sixth position signal to acquire the third position signal.

5. The control circuit according to claim 4, wherein the third filter assembly (14) comprises a second filter (141) and a signal converter (142); wherein

an input terminal of the signal converter (142) and an input terminal of the second filter (141) are electrically connected to the joint module (4), an output terminal of the signal converter (142) is electrically connected to the input terminal of the second filter (141), and an output terminal of the second filter (141) is electrically connected to the input terminal of the second signal fuser (13);

the signal converter (142) is configured to convert the first position signal; and

the second filter (141) is configured to fuse the converted first position signal and the second position signal to acquire the sixth position signal, and filter the signal whose frequency is less than the first reference frequency in the sixth position signal.

6. The control circuit according to claim 1, wherein the filter and fuser device (1) comprises a third signal fuser (15) and a fourth filter assembly (16); wherein

an input terminal of the fourth filter assembly (16) and an input terminal of the third signal fuser (15) are electrically connected to the joint module (4), an output terminal of the fourth filter assembly (16) is electrically connected to the input terminal of the third signal fuser (15), and an output terminal of the third signal fuser (15) is electrically connected to an input terminal of the first controller (2);

the fourth filter assembly (16) is configured to convert the second position signal, fuse the converted second position signal and the first position signal to acquire a seventh position signal, and filter a signal whose frequency is greater than a first reference frequency in the seventh position signal; and

the third signal fuser (15) is configured to fuse the second position signal and the filtered seventh position signal to acquire the third position signal.

7. A robot, comprising: a joint module (4) and the control circuit for the joint module as defined in any one of claims 1 to 6, wherein an input terminal of the joint module (4) is electrically connected to the second controller (3), and an output terminal of the joint module (4) is electrically connected to an input terminal of the filter and fuser device (1).

8. The robot according to claim 7, wherein the joint module (4) comprises: a power driver (41), a motor (42), a reducer (43), and a joint (44) that are electrically connected in sequence; wherein

a first sensor (45) is disposed between the reducer (43) and the joint (44), and is configured to generate a first position signal based on a sensed revolute angle input by the joint (44) and transmit the first position signal to the filter and fuser device (1);

a second sensor (46) is disposed between the motor (42) and the reducer (43), and is configured to generate a second position signal based on a sensed revolute angle input by the reducer (43) and transmit the second position signal to the filter and fuser device (1); and

a third sensor (47) is disposed between the power driver (41) and the motor (42), and is configured to generate a current signal based on a magnitude of a sensed current input by the motor (42) and transmit the current signal to the second controller (3).

9. A method for controlling a joint module, applicable to the control circuit for the joint module as defined in any one of claims 1 to 6, the method comprising:

acquiring a first position signal and a second position signal, wherein the first position signal indicates a position corresponding to a revolute angle input by a joint in the joint module, and the second position signal indicates a position corresponding to a revolute angle input by a reducer;

acquiring a third position signal by performing a filtering and fusing process on the first position signal and the second position signal, wherein the third position signal indicates a position corresponding to a revolute angle actually output by the reducer;

generating a first speed signal based on the third position signal and a target position signal; and

controlling the joint module based on the first speed signal, a second speed signal, and a current signal, wherein the second speed signal indicates a revolution speed output by a motor in the joint module, and the current signal indicates a magnitude of a current input by the motor.

10. The method according to claim 9, wherein acquiring the third position signal by performing the filtering and fusing process on the first position signal and the second position signal comprises:

acquiring a fourth position signal by filtering a signal whose frequency is greater than a first reference frequency in the first position signal;

acquiring a fifth position signal by filtering a signal whose frequency is less than the first reference frequency in the second position signal; and

acquiring the third position signal by fusing the fourth position signal and the fifth position signal.

11. The method according to claim 10, wherein acquiring the fifth position signal by filtering the signal whose frequency is less than the first reference frequency in the second position signal comprises:

performing frequency reduction on the second position signal based on a reduction ratio of the reducer; and

acquiring the fifth position signal by filtering the signal whose frequency is less than the first reference frequency in the second position signal experiencing the frequency reduction.

**12.** The method according to claim 11, wherein in a case that a first filter is a first-order filter, acquiring the fifth position signal by filtering the signal whose frequency is less than the first reference frequency in the second position signal experiencing the frequency reduction comprises:

acquiring a filtering time parameter, wherein the filtering time parameter indicates a bandwidth of the first filter; and
acquiring the fifth position signal by filtering the signal whose frequency is less than the first reference frequency by filtering the second position signal experiencing the frequency reduction based on the filtering time parameter using a first Laplace operator.

**13.** The method according to claim 11, wherein in a case that a first filter is a second-order filter, acquiring the fifth position signal by filtering the signal whose frequency is less than the first reference frequency in the second position signal experiencing the frequency reduction comprises:

acquiring a natural oscillation angular frequency parameter and a damping ratio parameter, wherein the natural oscillation angular frequency parameter indicates an angular frequency of oscillation in a case that a damping is 0, and the damping ratio parameter indicates a degree of energy dissipation in an oscillation process; and
acquiring the fifth position signal by filtering the signal whose frequency is less than the first reference frequency by filtering the second position signal experiencing the frequency reduction based on the natural oscillation angular frequency parameter and the damping ratio parameter using a second Laplace operator.

**14.** The method according to claim 9, wherein acquiring the third position signal by performing the filtering and fusing process on the first position signal and the second position signal comprises:

acquiring a sixth position signal by converting the first position signal and fusing the converted first position signal and the second position signal;
filtering a signal whose frequency is less than a first reference frequency in the sixth position signal; and
acquiring the third position signal by fusing the first position signal and the filtered sixth position signal.

**15.** The method according to claim 9, wherein acquiring the third position signal by performing the filtering and fusing process on the first position signal and the second position signal comprises:

acquiring a seventh position signal by converting the second position signal and fusing the converted second position signal and the first position signal;
filtering a signal whose frequency is greater than a first reference frequency in the seventh position signal; and
acquiring the third position signal by fusing the second position signal and the filtered seventh position signal.

FIG. 1

FIG. 2

FIG. 3

FIG. 4

EP 4 534 255 A1

FIG. 5

FIG. 6

FIG. 7

FIG. 8

FIG. 9

EP 4 534 255 A1

Target position signal → First controller (2) → First speed signal → Speed controller (31) → First current signal → Current controller (32) → Control signal → Power driver (41) → Third sensor (47) → Motor (42)

Third position signal → First controller (2)

Second speed signal → Speed controller (31)

Commutation signal → Current controller (32)

Second current signal → Current controller (32)

Third signal fuser (15) → Third position signal

Frequency-reduced second position signal ← Third frequency reducer (163) ← Second position signal ← Second sensor (46)

Second position signal experiencing the frequency reduction

Second signal converter (162)

Filtered seventh position signal

Converted second position signal

Fourth filter (161) ← First position signal ← First sensor (45)

Reducer (43)

Joint (44)

FIG. 10

Acquiring, by a robot, a first position signal and a second position signal — 1101

Acquiring, by the robot, a fifth position signal by filtering a signal whose frequency is less than the first reference frequency in the second position signal — 1102

Acquiring, by the robot, a fourth position signal by filtering a signal whose frequency is greater than a first reference frequency in the first position signal — 1103

Acquiring, by the robot, the third position signal by fusing the fourth position signal and the fifth position signal — 1104

Generating, by the robot, a first speed signal based on the third position signal and a target position signal — 1105

Controlling, by the robot, the joint module based on the first speed signal, a second speed signal, and a current signal — 1106

FIG. 11

FIG. 12

FIG. 13

Acquiring, by a robot, a first position signal and a second position signal — 1401

Acquiring, by the robot, a seventh position signal by converting the second position signal and fusing the converted second position signal and the first position signal — 1402

Acquiring, by the robot, a signal whose frequency is greater than a first reference frequency in the seventh position signal — 1403

Acquiring, by the robot, a third position signal by fusing the second position signal and the filtered seventh position signal — 1404

Generating, by the robot, a first speed signal based on the third position signal and a target position signal — 1405

Controlling, by the robot, the joint module based on the first speed signal, a second speed signal, and a current signal — 1406

FIG. 14

<div style="text-align:center">

**INTERNATIONAL SEARCH REPORT**

</div>

| International application No. |
|---|
| **PCT/CN2023/096675** |

| A. | CLASSIFICATION OF SUBJECT MATTER |
|---|---|

B25J9/16(2006.01)i

According to International Patent Classification (IPC) or to both national classification and IPC

| B. | FIELDS SEARCHED |
|---|---|

Minimum documentation searched (classification system followed by classification symbols)

IPC: B25J

Documentation searched other than minimum documentation to the extent that such documents are included in the fields searched

Electronic data base consulted during the international search (name of data base and, where practicable, search terms used)

CNTXT, ENTXT, DWPI, CNKI: 机器人, 机械手, 机械臂, 关节, 控制器, 滤波, 位置, 信号, 减速器, 转动, 角度, 电流, 电机, robot?, manipulator?, arm+, joint+, control+, filter+, position+, signal, reducer, rotat+, angle, current, motor?

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114851203 A (GUANGDONG MIDEA WHITE HOUSEHOLD APPLIANCE TECHNOLOGY INNOVATION CENTER CO., LTD. et al.) 05 August 2022 (2022-08-05) claims 1-15 | 1-15 |
| A | CN 113510695 A (ROKAE INC.) 19 October 2021 (2021-10-19) description, paragraphs 27-56, and figures 1-3 | 1-15 |
| A | CN 113059567 A (ROKAE (SHANDONG) INTELLIGENT TECHNOLOGY CO., LTD.) 02 July 2021 (2021-07-02) entire document | 1-15 |
| A | CN 110071676 A (TSINGHUA UNIVERSITY) 30 July 2019 (2019-07-30) entire document | 1-15 |
| A | JP 2002052485 A (YASKAWA ELECTRIC CORP.) 19 February 2002 (2002-02-19) entire document | 1-15 |
| A | US 5115418 A (SEIKO INSTRUMENTS INC.) 19 May 1992 (1992-05-19) entire document | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 August 2023** | **08 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| PCT/CN2023/096675 |

| Patent document cited in search report | | | Publication date (day/month/year) | Patent family member(s) | | | Publication date (day/month/year) |
|---|---|---|---|---|---|---|---|
| CN | 114851203 | A | 05 August 2022 | None | | | |
| CN | 113510695 | A | 19 October 2021 | None | | | |
| CN | 113059567 | A | 02 July 2021 | None | | | |
| CN | 110071676 | A | 30 July 2019 | CN | 110071676 | B | 02 April 2021 |
| JP | 2002052485 | A | 19 February 2002 | JP | 4483047 | B2 | 16 June 2010 |
| US | 5115418 | A | 19 May 1992 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210593324